# EUROPEAN PATENT SPECIFICATION

(11) **EP 0 629 672 B1**
(45) Date of publication and mention of the grant of the patent: **12.11.1997**
(21) Application number: 94109207.4
(22) Date of filing: 15.06.1994
(51) Int. Cl.: C09D 157/00, C09D 7/12

(54) **Polymerizable imidazolidinones as wet adhesion promoters in aqueous paints**
Polymerisierbare Imidarolidinone als Nass-Haftpromotore in wässrigen Farben
Imidazolidinones polymérisables comme promoteurs d'adhésion humide dans du vernis aqueux

(30) Priority: 17.06.1993 US 79296
(43) Date of publication of application: 21.12.1994
(73) Proprietor: National Starch and Chemical Investment Holding Corporation, Wilmington, Delaware 19809 (US)
(72) Inventor: Farwaha, Rajeev, Brampton, Ontario M5K 1H6 (CA); Currie, William, Elmira, Ontario N3B 2G3 (CA)
(74) Representative: Hagemann, Heinrich, Dr.rer.nat., Dipl.-Chem.

(56) References cited:
- 15TH PROC. WATER-BORNE HIGHER SOLIDS COATINGS SYMP, 1988 NEW ORLEANS US, pages 222-243, KREIS, SHERMAN 'development of a ureido functional monomer for promoting wet adhesion in latex paints'

## Description

This invention relates to aqueous based paints comprising all acrylic, styrene/acrylic and vinyl/acrylic latexes polymerized with imidazolidinones to promote adhesion to alkyd substrates.

Latex based paints for both indoor and outdoor use possess a number of advantages, such as, low odor, easy clean-up, and fast drying time, over solvent based paints, but they suffer from the drawback of exhibiting poor wet adhesion.

The term wet adhesion is used in the paint industry to describe the ability of a paint to retain its adhesive bond to a substrate under wet or high humidity conditions. A deficiency of wet adhesion properties limits the utility of latex paints in areas where humid environments might be encountered, for example, exteriors, bathrooms and kitchens. It also makes surfaces painted with latex paints less scrub resistant than those painted with organic solvent based paints.

The emulsion polymers used in formulating latex paints usually are all acrylic copolymers comprising alkyl esters of acrylic and methacrylic acid with minor amounts of acrylic and methacrylic acid, or they are vinyl/acrylic polymers comprising vinyl containing monomers or polymers in combination with softer acrylic monomers.

The all acrylic paints produce hard coatings resistant to scrubbing and provide good water resistance and wet adhesion; but because of the cost of the acrylic monomers, they are expensive. The vinyl/acrylic paints are less expensive and produce films that are hard, but they tend to have a much lower wet adhesion than their acrylic based counterparts.

In recent years improvements in wet adhesion properties have been obtained by the incorporation of amine, amide, and acetoacetate functionalities into the latex polymers. For example, cyclic ureido derivatives have been described in United States patents 4,104,220, 4,111,877, 4,219,454, 4,319,032 and 4,599,417 as imparting wet adhesion properties. However, these wet adhesion monomers are very expensive and their inclusion results in a drastic increase in the cost of the vinyl-acrylic polymers and all-acrylic polymers used in the latex based paints.

The present invention utilizes polymerizable imidazolidinones to impart excellent wet adhesion and scrub resistance properties to all acrylic and vinyl-acrylic latex based paints. Synthesis of these monomers is described in United States patent 4,577,031. These compounds have the general structure: 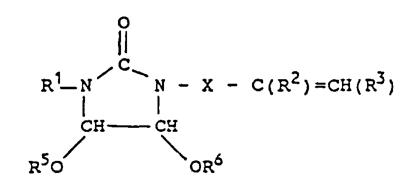 in which
R¹ is hydrogen or a C₁-C₆ linear or branched alkyl group or hydroxyalkyl;
X is a divalent radical selected from the group consisting of -(CH₂)ₘ-, 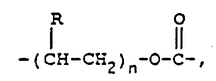 and 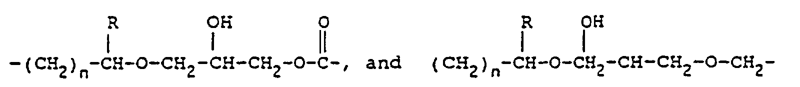 in which R is a hydrogen or a methyl group, m is an integer from 0 to 5, and n is an integer from 1 to 5, preferably m or n being 1;
R² is hydrogen or a methyl group;
R³ is hydrogen or 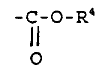 in which R⁴ is a hydrogen or a linear or branched C₁ to C₆ alkyl or hydroxyalkyl;
R⁵ and R⁶ are independently hydrogen or a linear or branched C₁-C₄ alkyl group.

The preferred imidazolidinone monomers for this invention are 3-(methacryloxyethyl)-4,5-dihydroxy-2 imidazolidinone, 3-allyl-4,5-dihydroxy-2-imidazolidinone, and 3-allyl-4,5-dimethoxy-2-imidazolidinone. The cyclic imidazolidinone is copolymerized into the polymeric chain of the latex at a concentration by weight of 0.5 to 5.0 parts per hundred parts of the monomers used to make the copolymer of the latex (pphm).

The latex polymer is generally an all acrylic, styrene/acrylic, or vinyl/acrylic polymer. The proportion of the respective copolymerizable monomers used to form the latex is usually balanced to provide a minimum film forming temperature close to or below room temperature and a glass transition temperature sufficient to provide a hard film on drying. The desired Tg range for the polymer can be calculated using the Fox equation:
1/Tg (polymer) = W₍ₐ₎/Tg₍ₐ₎+W_{(b)}/Tg_{(b)}+... , where W₍ₐ₎ and W_{(b)} are the weight fractions of comonomers (a) and (b) and Tg₍ₐ₎ and Tg_{(b)} are the glass transition temperatures for homopolymers (a) and (b), respectively. Glass transition temperatures for various homopolymers are available in many literature sources, including J. Brandup and E.H. Immergut, *Polymer Handbook*, 2nd Edition, John Wiley & Sons, New York, pp 139-192 (1975).

Suitable monomers for forming the latex include the C₁-C₄ alkyl esters of acrylic and methacrylic acid; vinyl esters of linear and branched carboxylic acids having 1 to 25 carbon atoms, preferably 2 to 20 carbon atoms, such as, vinyl acetate, vinyl propionate, vinyl butyrate, vinyl valerate, vinyl 2-ethylhexylacrylate, vinyl isononanoate, vinyl laurate, vinyl stearate, vinyl versatate; and styrene derivatives, such as, alpha-methylstyrene, 2-chlorostyrene, 4-chlorostyrene, 2,5-dichlorostyrene and 4-methoxystyrene. The preferred monomers are methyl acrylate, ethyl acrylate, butyl acrylate, 2-ethylhexyl acrylate, decyl acrylate, methyl methacrylate, ethyl methacrylate, vinyl acetate, vinyl versatate, ethylene, vinyl chloride, styrene, C₁-C₄ substituted styrene and halogenated styrene.

The polymerization of the polymer can be accomplished by known procedures for polymerization in aqueous emulsion. Optionally, conventional seeding procedures for polymerization to achieve the desired average particle size and particle size distribution are used. If seeding is employed, the polymer seed will be present in amounts that correspond to 0.1% to 8% by weight of the total polymer, and will range in size from 20% to 60% of the diameter of the polymer particles to be formed.

The seed latex can constitute a previously prepared latex or polymer powder, or it can be prepared in situ. The monomer composition of the seed latex can vary; however, it is preferable that it be substantially the same as that of the polymer.

The monomer or comonomers and, optionally, the seed to be employed in the preparation of the polymer are dispersed into water with agitation sufficient to emulsify the mixture. The aqueous medium may also contain a free radical polymerization catalyst, an emulsifying agent (i.e. surfactant), or other ingredients that are known and conventionally employed in the art as emulsion polymerization aids.

Suitable free radical polymerization catalysts are the catalysts known to promote emulsion polymerization and include water-soluble oxidizing agents, such as, organic peroxides (e.g. t-butyl hydroperoxide, cumeme hydroperoxide, etc.), inorganic oxidizing agents (e.g. hydrogen peroxide, potassium persulfate, sodium persulfate, ammonium persulfate, etc.) and those catalysts that are activated in the water phase by a water-soluble reducing agent. Such catalysts are employed in a catalytic amount sufficient to cause polymerization. As a general rule, a catalytic amount ranges from 0.01 to 5 parts per hundred parts of monomer. As alternatives to heat and catalytic compounds to activate the polymerization, other free radical producing means, such as exposure to activating radiations, can be employed.

Suitable emulsifying agents include anionic, cationic, and nonionic emulsifiers customarily used in emulsion polymerization. Usually, at least one anionic emulsifier is utilized and one or more nonionic emulsifiers may also be utilized. Representative anionic emulsifiers are the alkyl aryl sulfonates, alkali metal alkyl sulfates, the sulfonated alkyl esters, and fatty acid soaps. Specific examples include sodium dodecylbenzene sulfonate, sodium butylnapthalene sulfonate, sodium lauryl sulfate, disodium dodecyl diphenyl ether disulfonate, N-octadecyl disodium sulfosuccinate and dioctyl sodium sulfosuccinate. The emulsifying agents are employed in amounts to achieve adequate emulsification and to provide desired particle size and particle size distribution.

Other ingredients known in the art to be useful for various specific purposes in emulsion polymerization, such as, acids, salts, chain transfer agents, and chelating agents, can also be employed in the preparation of the polymer. For example, if the polymerizable constituents include a monoethylenically unsaturated carboxylic acid comonomer, polymerization under acidic conditions (pH 2-7, preferably 2-5) is preferred. In such instances, the aqueous medium can include those known weak acids and their salts that are commonly used to provide a buffered system at the desired pH range.

The manner of combining the polymerization ingredients can be by various known monomer feed methods, such as, continuous monomer addition, incremental monomer addition, or addition in a single charge of the entire amount of monomers. The entire amount of the aqueous medium with polymerization additives can be present in the polymerization vessel before introduction of the monomer, or alternatively, the aqueous medium, or a portion of it, can be added continuously or incrementally during the course of the polymerization.

Polymerization is initiated by heating the emulsified mixture with continued agitation to a temperature usually between 50°-110°C, preferably between 60°-100°C. Polymerization is continued by maintaining the emulsified mixture at the selected temperature until conversion of the monomer or monomers to polymer has been reached.

Following polymerization, the solids content of the resulting aqueous heterogeneous polymer latex can be adjusted to the level desired by the addition of water or by the removal of water by distillation. Generally, the desired level of polymeric solids content is from 20-60% by weight on a total weight basis.

For various applications, it is sometimes desirable to have small amounts of additives, such as, surfactants, bacteriocides, pH modifiers, and antifoamers, incorporated in the latex, and this may be done in a conventional manner and at any convenient point in the preparation of the latexes.

This invention is illustrated, but not limited, by the following examples:

### EXAMPLES

The following examples describe the synthesis of all-acrylic latexes incorporating polymerizable imidazolidinones. The latexes were incorporated into the standard semi-gloss and satin paint formulations disclosed below and the paints tested for wet adhesion and scrub resistance.
**Wet Adhesion/Scrub Resistance Test Procedure**: Scrub panels were prepared by drawing down a semi-gloss alkyd base (chosen as being the most difficult test for wet adhesion) into a 3 mil film onto a leneta chart. The charts were aged at least one week at room temperature. The test latexes were then drawn down into a 2 mil film onto the aged alkyd surface and allowed to dry for 48 hours. The dried charts were affixed to glass panels and put into the scrub machine equipped with a scrub brush and a basin for holding the test panel. The brush was conditioned by immersing it in warm water for 30 minutes and then placed in the machine holder. The test panel was placed in the basin under the brush and 200 gm of 50°C water was added to the basin. The scrub machine was started and run for 400 strokes. If the coating remained intact, 8 gm of a dry abrasive (Ajax®) were placed under the brush and the machine run for another 100 strokes. The last step was repeated until the coating failed, that is, when the test paint stripped from the alkyd base. The number of strokes to failure was recorded.

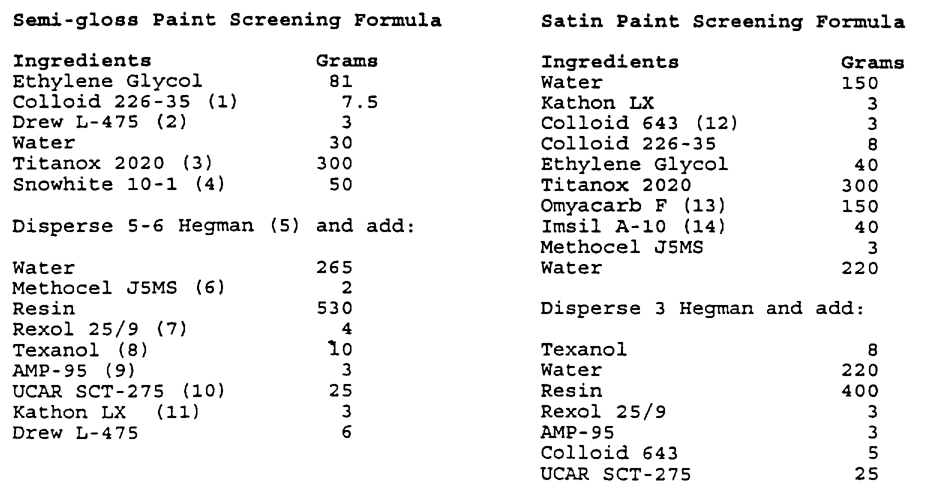

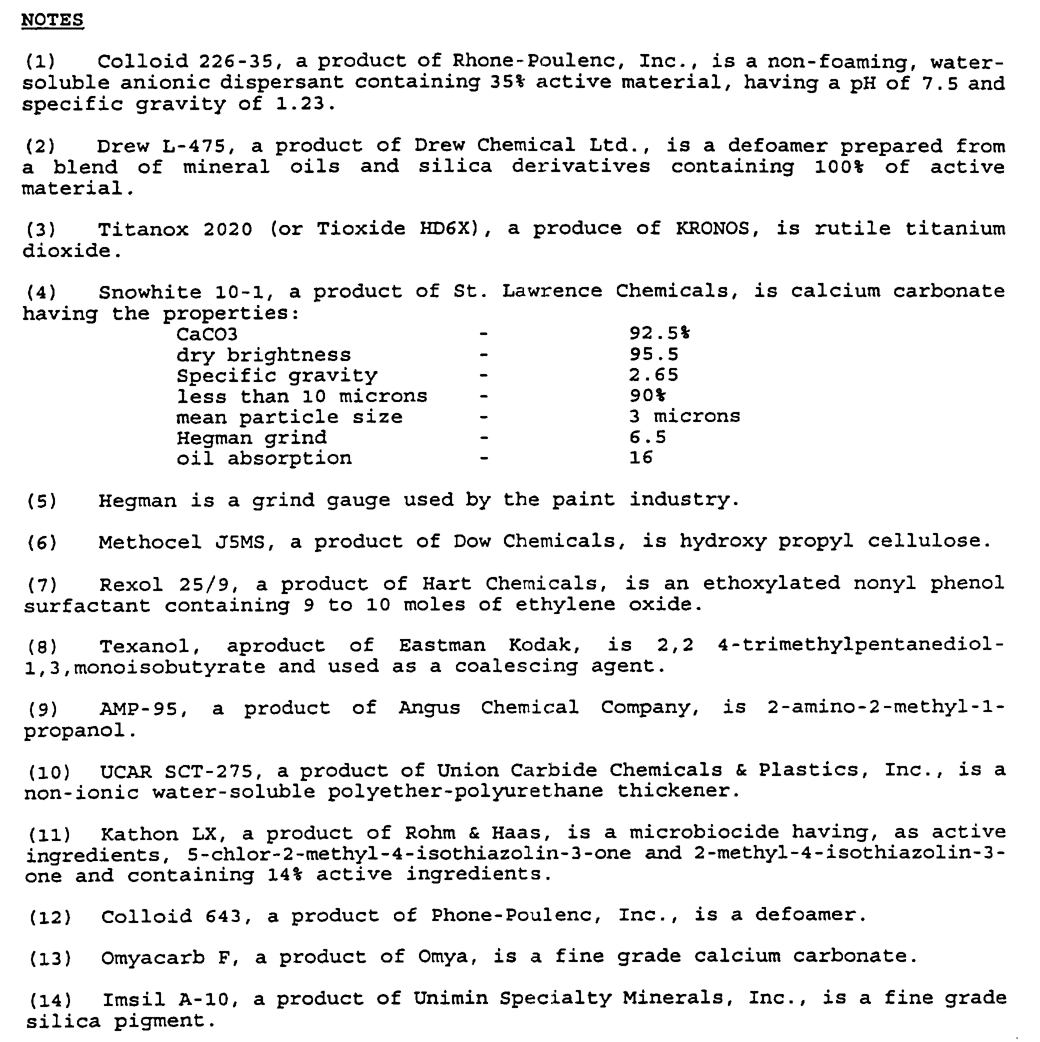

### Example 1: All acrylic latexes with 3-allyl-4,5-dihydroxy-2-imidazolidinone.

A series of all-acrylic latexes containing 3-allyl-4,5-dihydroxy-2-imidazolidinone, having the following chemical structure, 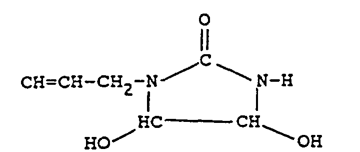 were synthesized and evaluated in **semi-gloss and satin paint screening formulas**.

The latexes were synthesized according to the following procedure using a surfactant package from Rhone-Poulenc of Sipex UB (sodium lauryl sulfate) and Igepal CA897 (ethoxylated octyl phenol) containing 40 moles of ethylene oxide, and the monomer and catalyst charges tabulated in Table I.

In a 3 liter reaction vessel, equipped with a reflux condenser, addition funnels, and stirrer, an initial charge of water, anionic and non-ionic surfactant and defoamer, was mildly agitated and heated to 78°C. A 52.0 gm portion of the monomer mix and 8.0 gm of the catalyst solution were then charged to the reaction vessel and the reaction vessel mix held for 20 minutes at the same temperature. The remainder of the monomer mix was metered into the reaction over the course of 4 hours. Imidazolidinone slow add mix was metered into the reactor over 1.5 hours after seeding.

The catalyst solution was delivered to the reactor over a period of 4.5 hours and the reaction allowed to proceed to completion. The reaction was then held for 10 minutes at 78°C, and allowed to cool to room temperature. As the reaction mixture was cooling, 0.5 gm of tertiary butyl hydroperoxide and 0.2 gm sodium formaldehyde sulfoxylate were added when the temperature reached 65°C. The pH of the resultant latex was adjusted to between 7-8 by the addition of 26.6% aqueous ammonium hydroxide solution.

**Table I**

| **Initial Charge** | | |
|---|---|---|
| **Compound** | **Grams** | **Concentration in pphm** |
| Water | 431.0 | 46.0 |
| Sipex UB (27%) | 7.0 | 0.94 |
| Drew L-475 | 0.4 | 0.05 |

| **Monomer Mix** | | |
|---|---|---|
| Water | 250.0 | 33.7 |
| Sipex UB (27%) | 29.2 | 3.94 |
| Igepal CA 897 (70%) | 34.0 | 4.59 |
| Methyl methacrylate | 385.0 | 52.02 |
| Butyl acrylate | 355.0 | 47.98 |
| Methacrylic acid | 7.7 | 1.04 |

| **Imidazolidinone Slow Add** | | |
|---|---|---|
| Water | 30.0 | 4.05 |
| 3-Allyl-4,5-dihydroxy 2-imidazolidinone (50%) | 16.09 | 2.17 |

| **Catalyst Slow Add** | | |
|---|---|---|
| Water | 50.0 | 6.75 |
| Ammonium Persulfate | 4.0 | 0.54 |

The resulting latex was designated **A** and had the following physical properties: 51.4% solids; particle size 119nm; viscosity 660 mPa.s (cps); pH 8.3.

A second all-acrylic latex employing 3-allyl-4,5-dihydroxy-2-imidazolidinone at 2 parts per hundred monomer (@ 100% active) was synthesized. The latex was designated **B**, and exhibited the following physical properties: 50.65% solids; particle size 127nm; viscosity 296 mPa.s (cps); pH 8.0.

As a control, an all-acrylic latex designated **C**, with the same monomer composition as that of latexes **A** and **B**, but without polymerizable 3-allyl-4,5-dihydroxy-2-imidazolidinone was synthesized and exhibited the following physical properties: 50% solids; particle size 174nm 174; pH 8.0; viscosity 80 mPa.s.

A higher solids all-acrylic latex with the same monomer composition as latex **A** employing 1 part per hundred monomer of 3-allyl-4,5-dihydroxy-2-imidazolidinone was synthesized and designated **D**. Latex **D** had the following properties: 56% solids; particle size 149 nm; pH 8.0; viscosity 2450 mPa.s.

The compositions in parts per hundred parts of monomer by weight and the latex properties are set out in Table II.

**Table II**

| **Composition and Properties of All-acrylic Latexes** | | | | |
|---|---|---|---|---|
| ^{**a**}**Latex Composition** | **A and D** | | **B** | **C** |
| Methyl methacrylate | 52.0 | | 52.0 | 52.0 |
| Butyl acrylate | 48.0 | | 48.0 | 48.0 |
| Methacrylic acid | 1.04 | | 1.04 | 1.04 |
| 3-Allyl-4,5-dihydroxy 2-imidazolidinone | 1.0 | | 2.0 | 0 |

| **Product Physicals** | **A** | **D** | **B** | **C** |
|---|---|---|---|---|
| % Solids | 50.0 | 50.0 | 50.6 | 50.0 |
| PS (nm) | 119 | 149 | 127 | 174 |
| pH | 8.3 | 8.0 | 8.0 | 8.0 |
| Viscosity mPa.s (cps) | 660 | 2450 | 296 | 80 |

| | | | | |
|---|---|---|---|---|
| ^{a}In parts per hundred monomer | | | | |

Paint compositions employing the latexes of Table II were evaluated for wet adhesion/scrub resistance in semigloss and satin paint screening formulas. The number of strokes to failure are set out in Table III and show that the wet adhesion to alkyd substrates of latexes containing polymerizable imidazolidinones is superior to that of latexes containing no polymerizable imidazolidinones.

**Table III**

| **Wet Adhesion/Scrub Resistance Test Results** | | | | |
|---|---|---|---|---|
| Latex | A | B | C | D |
| Strokes to Failure in Semi-gloss Paint | 1508 | 1420 | 820 | 2226 |
| Strokes to Failure in Satin Paint | not tested | not tested | not tested | 5368 |

### Example 2: Vinyl-acrylic latex with 3-allyl-4,5-dihydroxy-2-imidazolidinone.

A vinyl/acrylic latex using 1 part per hundred monomer of 3-allyl-4,5-dihydroxy-2-imidazolidinone was synthesized and designated latex **E**. Latex **E** had the following physical properties: 55.8% solids; particle size 428nm; viscosity 1050 mPa.s (cps); pH 4.8. As a control, a vinyl acrylic latex containing no 3-allyl-4,5-dihydroxy-2-imidazolidinone comonomer, designated **F**, was synthesized. The latex properties and monomeric compositions are set out in Table IV. Latexes E and F were formulated into the **semigloss paint screening formula** and evaluated for wet adhesion properties. The number of strokes to failure are also set out in Table IV and show that the imidazolidinone enhances wet adhesion in vinyl-acrylic latexes.

**Table IV**

| **Composition and Properties of Vinyl/Acrylic Latexes** | | |
|---|---|---|
| **Latex Composition pphm** | **E** | **F** |
| Vinyl acetate | 80 | 80 |
| Butyl acrylate | 20 | 20 |
| 3-Allyl-4,5-dihydroxy-2-imidazolidinones | 1.0 | X |

| **Product Physicals** | | |
|---|---|---|
| % Solids | 55.8 | 55.0 |
| PS (nm) | 428 | 450 |
| Viscosity mPa.s (cps) | 1050 | 1200 |
| pH | 4.8 | 5.0 |
| **Wet Adhesion** (strokes to failure) | 552 | 280 |

### Example 3: All acrylic latex with 3-allyl-4,5-dimethoxy-2-imidazolidinone and with ureido monomer

An all acrylic latex was synthesized using 1 part per hundred monomer of 3-allyl-4,5-dimethoxy-2-imidazolidinone as a wet adhesion promoter. The resulting latex was designated **G** and exhibited the following properties: 55.9% solids; particle size 158nm; viscosity 2870 mPa.s (cps); pH 8.0. An all acrylic latex designated **H** was synthesized using 1 part per hundred monomer of commercially available ureido monomer namely, Sipomer WAM (a product of Rhone-Poulenc), employing polymerization procedure and surfactant system of latex **D**. The following physical properties were obtained: 56.1% solids; particle size 153nm; viscosity 3630 mPa.s (cps); pH 8.0. Latexes **G** and **H** were formulated into the **semigloss paint screening formula** and compared for wet adhesion properties to latex **D** The results are set out in Table V and show that the wet adhesion properties of dihydroxy derivatives are comparable to the dimethoxy imidazolidinone derivative and that the wet adhesion performance of imidazolidinone is comparable to that of ureido monomer.

**Table V**

| **Wet Adhesion** | | | |
|---|---|---|---|
| **Latex** | **G** | **D** | **H** |
| Wet Adhesion Promoter | 3-allyl-4,5 methoxy-2-imidazolidinone | 3-allyl-4,5 dihydroxy-2-imidazolidinone | Ureido |
| Strokes to Failure | 3528 | 2800 | 2500 |

## Claims

1. A latex paint formulation comprising a latex polymer which is the reaction product of monomers selected from the group consisting of C₁-C₄ alkyl esters of acrylic and methacrylic acid, vinyl esters of C₁-C₂₅ linear and branched carboxylic acids, styrene, C₁-C₄ substituted styrene, and halogenated styrene, in combination with 0.5 to 5.0 parts per hundred parts of monomer of a cyclic imidazolidinone having the general structure: 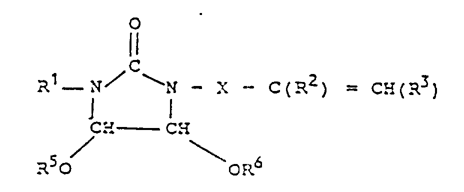 in which
R¹ is hydrogen or a C₁-C₆ linear or branched alkyl group or hydroxyalkyl;
X is a divalent radical selected from the group consisting of -(CH₂)ₘ-, 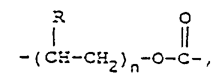 and 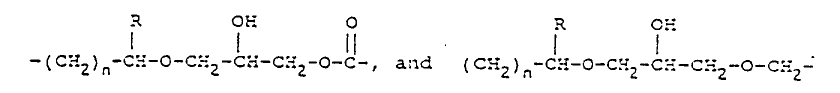 in which R is a hydrogen or a methyl group, m is an integer from 0 to 5, and n is an integer from 1 to 5;
R² is hydrogen or a methyl group;
R³ is hydrogen or 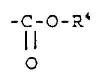 in which R⁴ is a hydrcgen or a linear or branched C₁ or C₆ alkyl or hydroxyalkyl;
R⁵ and R⁶ are independently hydrogen or a linear or branched C₁-C₄ alkyl group.

2. The paint composition of claim 1 in which the imidazolidinone is selected from the group consisting of 3-(methacryloxyethyl)-4,5-dihydroxy-2 imidazolidinone, 3-allyl-4,5-dihydroxy-2-imidazolidinone, and 3-allyl-4,5-dimethoxy-2-imidazol-idinone.

3. A method of improving the wet adhesion and scrub resistance properties of a latex copolymer for use within a paint formulation that comprises copolymerizing the latex copolymer with a cyclic imidazolidinone having the general structure 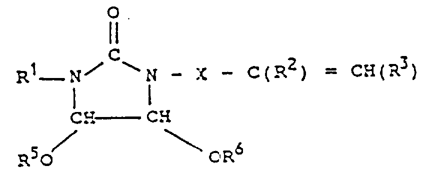 in which
R¹ is hydrogen or a C₁-C₆ linear or branched alkyl group or hydroxyalkyl;
X is a divalent radical selected from the group consisting of -(CH₂)ₘ-, 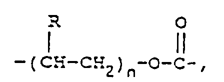 and 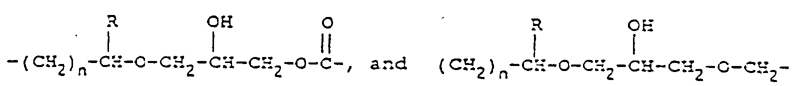 in which R is a hydrogen or a methyl group, m is an integer from 0 to 5, and n is an integer from 1 to 5;
R² is hydrogen or a methyl group;
R³ is hydrogen or 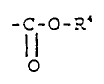 in which R⁴ is a hydrogen or a linear or branched C₁ or C₆ alkyl or hydroxyalkyl;
R⁵ and R⁶ are independently hydrogen or a linear or branched C₁-C₄ alkyl group,
the imidazolidinone present in an amount of 0.5 to 5.0 parts per hundred parts of monomer used to make the copolymer.

4. The method according to claim 4 in which the imidazolidinone is selected from the group consisting of 3-(methacryloxyethyl)-4,5-dihydroxy-2 imidazolidinone, 3-allyl-4,5-dihydroxy-2-imidazolidinone, and 3-allyl-4,5-dimethoxy-2-imidazolidinone.

## Patentansprüche

1. Latexfarbenzubereitung, umfassend ein Latexpolymer, das das Reaktionsprodukt von Monomeren, ausgewählt aus der aus C₁-C₄-Alkylestern von Acryl- und Methacrylsäure, Vinylestern von unverzweigten und verzweigten C₁-C₂₅-Carbonsäuren, Styrol, C₁-C₄-substituiertem Styrol und halogeniertem Styrol bestehenden Gruppe ist, in Kombination mit 0,5 bis 5,0 Teilen pro 100 Teile Monomer eines cyclischen Imidazolidinons der allgemeinen Strukturformel: 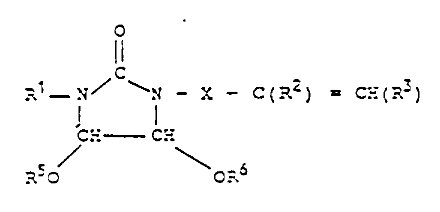 worin
R¹ Wasserstoff oder ein unverzweigter oder verzweigter C₁-C₆-Alkyl- oder -Hydroxyalkylrest ist,
X eine bivalente Gruppe, ausgewählt aus der aus -(CH₂)ₘ-, 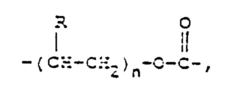 und 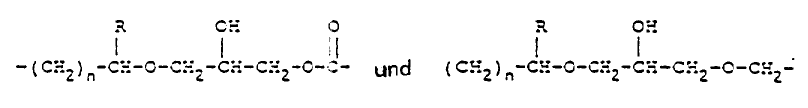 bestehenden Gruppe ist, worin R ein Wasserstoff- oder ein Methylrest ist, m eine ganze Zahl von 0 bis 5 ist und n eine ganze Zahl von 1 bis 5 ist,
R² Wasserstoff oder ein Methylrest ist,
R³ Wasserstoff oder 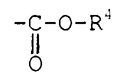 ist, worin R⁴ Wasserstoff oder ein unverzweigtes oder verzweigtes C1- oder C6-Aklyl oder -Hydroxyalkyl ist,
R⁵ und R⁶ unabhängig voneinander Wasserstoff oder ein unverzweigter oder verzweigter C₁-C₄-Alkylrest sind.

2. Farbzusammensetzung nach Anspruch 1, worin das Imidazolidinon aus der aus 3-(Methacryloxyethyl)-4,5-dihydroxy-2-imidazolidinon, 3-Allyl-4,5-dihydroxy-2-imidazolidinon und 3-Allyl-4,5-dimethoxy-2-imidazolidinon bestehenden Gruppe ausgewählt ist.

3. Verfahren zur Verbesserung der Naßhaftfestigkeit und Scheuerfestigkeit eines Latexcopolymers zur Verwendung in einer Farbzubereitung, das das Copolymerisieren des Latexcopolymers mit einem cyclischen Imidazolidinon umfa3t, wobei das Imidazolidinon die allgemeine Strukturformel 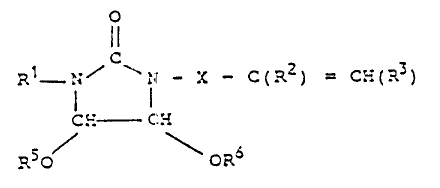 aufweist, worin
R¹ Wasserstoff oder ein verzweiger oder unverzweigter C₁-C₆-Alkyl- oder -Hydroxyalkylrest ist,
X eine bivalente Gruppe, ausgewählt aus der aus -(CH₂)ₘ-, 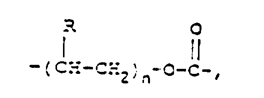 und 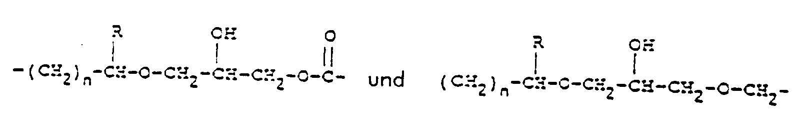 bestehenden Gruppe ist, worin R ein Wasserstoff- oder ein Methylrest ist, m ein ganze Zahl von 0 bis 5 ist und n eine ganze Zahl von 1 bis 5 ist,
R² Wasserstoff oder ein Methylrest ist,
R³ Wasserstoff oder 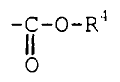 ist, worin R⁴ Wasserstoff oder ein unverzweigtes oder verzweigtes C₁- oder C₆-Alkyl oder -Hydroxyalkyl ist,
R⁵ und R⁶ unabhängig voneinander Wasserstoff oder ein unverzweigter oder verzweigter C₁-C₄-Alkylrest sind,
wobei das Imidazolidinon in Mengen von 0,5 bis 5,0 Teilen pro 100 Teile des Monomers, das zur Herstellung des Copolymers verwendet wird, vorliegt.

4. Verfahren nach Anspruch 3, wobei das Imidazolidinon aus der aus 3-(Methacryloxyethyl)-4,5-dihydroxy-2-imidazolidinon, 3-Allyl-4,5-dihydroxy-2-imidazolidinon und 3-Allyl-4, 5-dimethoxy-2-imidazolidinon bestehenden Gruppe ausgewählt ist.

## Revendications

1. Formulation de peinture au latex, comprenant comme latex un polymère qui est le produit de réaction de monomères choisis dans le groupe consistant en esters d'alkyle en C₁ à C₄ d'acides acrylique et méthacrylique, esters de vinyle d'acides carboxyliques linéaires et ramifiés en C₁ à C₂₅, styrène, styrène à substituant en C₁ à C₄ et styrène halogéné, en association avec 0,5 à 5,0 parties, pour cent parties de monomère, d'une imidazolidinone cyclique répondant à la formule générale : 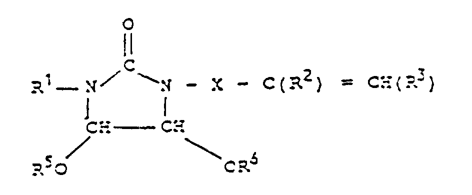 dans laquelle
R¹ représente de l'hydrogène ou un groupe alkyle ou hydroxyalkyle linéaire ou ramifié en C₁ à C₆ ;
X est un radical divalent choisi dans le groupe consistant en radicaux -(CH₂)ₘ-, 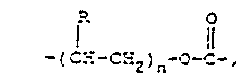 et 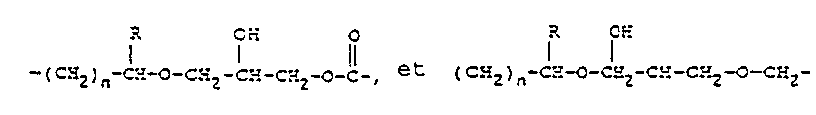 dans lesquels R est un atome d'hydrogène ou un groupe méthyle, m est un nombre entier de 0 à 5 et n est un nombre entier de 1 à 5 ;
R² est de l'hydrogène ou un groupe méthyle ;
R³ est de l'hydrogène ou un groupe 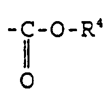 dans lequel R⁴ est un atome d'hydrogène ou un groupe alkyle ou hydroxyalkyle linéaire ou ramifié en C₁ à C₆ ;
R⁵ et R⁶ représentent, indépendamment, de l'hydrogène ou un groupe alkyle en C₁ à C₄ linéaire ou ramifié.

2. Composition de peinture suivant la revendication 1, dans laquelle l'imidazolidinone est choisie dans le groupe consistant en la 3-(méthacryloxyéthyl)-4,5-dihydroxy-2-imidazolidinone, la 3-allyl-4,5-dihydroxy-2-imidazolidinone, et la 3-allyl-4,5-diméthoxy-2-imidazolidinone.

3. Procédé pour améliorer les propriétés d'adhésion à l'état humide et de résistance au frottement à la brosse d'un latex copolymère destiné à être utilisé dans une formulation de peinture, qui comprend la copolymérisation du latex copolymère avec une imidazolidinone cyclique répondant à la formule générale 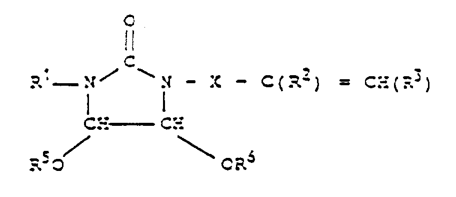 dans laquelle
R¹ représente de l'hydrogène ou un groupe alkyle ou hydroxyalkyle linéaire ou ramifié en C₁ à C₆ ;
X est un radical divalent choisi dans le groupe consistant en radicaux -(CH₂)ₘ-, 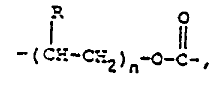 et 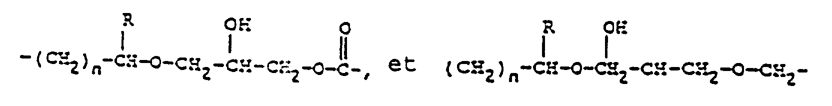 dans lesquels R est un atome d'hydrogène ou un groupe méthyle, m est un nombre entier de 0 à 5 et n est un nombre entier de 1 à 5 ;
R² est de l'hydrogène ou un groupe méthyle ;
R³ est de l'hydrogène ou un groupe 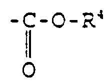 dans lequel R⁴ est un atome d'hydrogène ou un groupe alkyle ou hydroxyalkyle linéaire ou ramifié en C₁ à C₆ ;
R⁵ et R⁶ représentent, indépendamment, de l'hydrogène ou un groupe alkyle en C₁ à C₄ linéaire ou ramifié,
l'imidazolidinone étant présente en une quantité de 0,5 à 5,0 parties pour cent parties de monomères utilisés pour former le copolymère.

4. Procédé suivant la revendication 3, dans lequel l'imidazolidinone est choisie dans le groupe consistant en la 3-(méthacryloxyéthyl)-4,5-dihydroxy-2-imidazolidinone, la 3-allyl-4,5-dihydroxy-2-imidazolidinone et la 3-allyl-4,5-diméthox-2-imidazolidinone.
